# EUROPÄISCHE PATENTANMELDUNG

(11) **EP 0 738 544 A1**
(43) Veröffentlichungstag der Anmeldung: **23.10.1996**
(21) Anmeldenummer: 96105623.1
(22) Anmeldetag: 10.04.1996
(51) Int. Cl.: B07C 1/02, B07C 3/08, B65G 17/12, B65G 47/46

(54) **Stückgutförderer zum Sortieren von Stückgutteilen**

(30) Priorität: 18.04.1995 DE 19514373
(71) Anmelder: Bernhard Beumer Maschinenfabrik KG, D-59269 Beckum (DE)
(72) Erfinder: Jäger, Hans, D-59329 Wadersloh (DE)
(74) Vertreter: Hoormann, Walter, Dr.-Ing.

(57) **Zusammenfassung**

Stückgutförderer (Sorter) zum Sortieren von Stückgutteilen, insbesondere von relativ flachen, sortengleichen Stückgutteilen wie z.B. Zeitschriften oder CDs, mit einem angetriebenen, endlos umlaufenden Förderstrang, der aus einer Vielzahl von gelenkig miteinander verbundenen, an einer Führung geführten Förderelementen besteht, die jeweils einen Tragboden zur Aufnahme eines Stückgutteils aufweisen, der mit in Förderrichtung verlaufenden Durchgangsschlitzen versehen ist, die sich bis zu seiner Hinterkante erstrecken; mit wenigstens einer Aufgabestelle; und mit mehreren längs der Förderstrecke vorgesehenen Abgabestellen, an denen jeweils eine von einer Steuereinrichtung aktivierbare Abstreifeinrichtung angeordnet ist, die in einer nicht-aktivierten, normalen Betriebsstellung von den Stückgutteilen frei passierbar ist, und mittels welcher in einer aktivierten Abstreifstellung ein zugefördertes Stückgutteil vom Tragboden eines die betreffende Abgabestelle passierenden Förderelementes über dessen Hinterkante abzustreifen ist, wobei die Abstreifeinrichtungen jeweils einen von einem steuerbaren Antrieb betätigbaren kammförmigen Abstreifer mit Abstreifzinken aufweisen, welche sich in der nicht-aktivierten Betriebsstellung außerhalb des Bewegungspfades der Tragböden und der Stückgutteile befinden, und welche sich in der aktivierten Abstreifstellung so weit in den Bewegungspfad der Tragböden erstrecken, daß sie jeweils in einen Schlitz des Tragbodens eines die Abstreifeinrichtung passierenden Förderelementes greifen, wobei die Abstreifeinrichtungen (13) unterhalb der Tragböden (6) angeordnet sind, wobei die Abstreifzinken (15) eines aktivierten Abstreifers (14) bis über die Oberseite des Tragbodens (6) eines die betreffende Abstreifeinrichtung (13) passierenden Tragbodens (6) nach oben vorstehen.

## Beschreibung

Die Erfindung betrifft einen auch als Sorter bezeichneten Stückgutförderer zum Sortieren von Stückgutteilen, insbesondere von relativ flachen, sortengleichen Stückgutteilen wie Briefen, Zeitschriften, Büchern, CDs, Videobändern u.dgl., mit einem angetriebenen, endlos umlaufenden Förderstrang, der aus einer Vielzahl von gelenkig miteinander verbundenen, an einer Führung geführten Förderelementen besteht, die jeweils einen Tragboden zum Abstützen eines an einer vorgegebenen Abgabestelle abzugebenden Stückgutteils aufweisen, der mit in Förderrichtung verlaufenden Durchgangsschlitzen versehen ist, die sich von seinem in Förderrichtung vorn liegenden vorderen Abschnitt bis zu seiner Hinterkante erstrecken; mit wenigstens einer Aufgabestelle, an welcher zu sortierende Stückgutteile jeweils einzeln auf den Tragboden eines freien Förderelementes aufzugeben sind; und mit mehreren längs der Förderstrecke vorgesehenen Abgabestellen (Endstellen), an denen jeweils eine von einer Steuereinrichtung aktivierbare Abstreifeinrichtung angeordnet ist, mittels welcher in einer aktivierten Abstreifstellung ein zugefördertes Stückgutteil vom Tragboden eines die betreffende Abgabestelle passierenden Förderelementes über dessen Hinterkante abzustreifen ist, wobei die Abstreifeinrichtungen jeweils einen von einem steuerbaren Antrieb betätigbaren kammförmigen Abstreifer mit Abstreifzinken aufweisen, welche sich in der nicht-aktivierten Betriebsstellung außerhalb des Bewegungspfades der Tragböden und der Stückgutteile befinden, und welche sich der aktivierten Abstreifstellung so weit in den Bewegungspfad der Tragböden erstrecken, daß sie jeweils in einen Schlitz des Tragbodens eines die Abstreifeinrichtung passierenden Förderelementes greifen.

Sorter unterschiedlichster Ausgestaltung werden in zunehmendem Maße für eine automatisierte Handhabung von Stückgut eingesetzt, um von Hand oder mittels Aufgabvorrichtungen aufgegebene Stückgutteile unter entsprechender Sortierung an einer von mehreren Abgabestellen gezielt wieder aus dem Sorter auszuschleusen. Typische Anwendungsfälle sind die Sortierung von Paketen bei der Post oder die Sortierung von Gepäckstücken auf Flughäfen, doch gibt es darüber hinaus eine Vielzahl weiterer Verwendungsmöglichkeiten wie bspw. in Versandhäusern, Verlagen, etc.

Um die zu sortierenden Stückgutteile jeweils an der vorgesehenen Abgabestelle ausschleusen zu können, werden die Stückgutteile in der Regel entsprechend codiert. Ihr Code wird nach ihrer Aufgabe auf den Tragboden eines Förderelementes von einer Leseeinrichtung gelesen, und die entsprechenden Daten werden in einen Rechner gegeben, von dem die Steuereinrichtung sodann zu gegebener Zeit ein Ausschleussignal erhält, welches bewirkt, daß das Stückgutteil an der vorgesehenen Abgabestelle abgegeben wird.

Die Ausgestaltung bekannter Sorter bzgl. ihrer Förderelemente, ihres Antriebes, ihres Abgabemechanismus' sowie der Aufgabe- und Abgabestellen ist sehr unterschiedlich, wobei sich die Wahl einer bestimmten Ausbildung bspw. der Förderelemente oder deren Ausschleusmechanismus neben Kostengesichtspunkten u.a. auch an der Art des zu handhabenden Stückgutes orientiert.

Abgesehen davon, daß es auch Sorter gibt, deren Förderstrang von einem durchgehenden Gurtförderer o.dgl. gebildet wird, von dem die Stückgutteile an der vorgesehenen Abgabestelle mit einem quer zur Förderrichtung wirksamen Stößel (Puscher) ausgeschleust werden, ist der Förderstrang i.a. als Gliederförderer mit einer Vielzahl von gelenkig miteinander verbundenen Förderelementen ausgebildet, deren Tragboden i.a. Bestandteil eines Kippelementes ist, welches an der vorgesehenen Abgabestelle seitlich zu kippen ist, um das vom Tragboden abgestützte Stückgutteil auszuschleusen. Hierfür sind wiederum zahlreiche unterschiedliche Ausgestaltungen bekannt, um ein zielgenaues und möglichst schonendes Ausschleusen verwirklichen zu können. Außer diesen Kipp-Sortern und Sonderformen, bei denen die Förderelemente aus kurzen Bandförderern bestehen, deren Förderrichtung rechtwinklig zur Förderrichtung des Sorters verläuft, sind Sorter bekannt, bei denen die Stückgutteile an der vorgesehenen Aufgabestelle - wie bereits ausgeführt - seitlich von einem (i.a. ortsfesten) Stößel abgestoßen oder aber mittels mitfahrender Kulissen (EP 0 626 324 A1) oder schwenkbarer Abstreifer (DE 39 18 196 C1) zur Seite hin abgestreift werden.

Diese bekannten Sorter sind insbesondere bzgl. ihrer Ausschleusmechanismen nicht geeignet oder/und zu aufwendig, wenn es sich bei dem Stückgut um relativ flache Teile wie Zeitschriften oder CDs handelt, die bspw. mittels des Sorters zu bestimmten Kommissionen zusammengestellt werden sollen.

Für derartige Einsatzfälle ist in dem Aufsatz "Advanced transport stacker live mail test" von J. Buday in Z. "International Journal of Research and Engineering", 1991, S. 93-97, bereits ein gattungsgemäßer Sorter vorgeschlagen worden, dessen Förderelemente jeweils einen mit Durchgangsschlitzen versehenen Tragboden aufweisen und mit an den Abgabestellen angeordneten Abstreifeinrichtungen zusammenwirken, die jeweils oberhalb einer Abgabestelle angeordnet sind. Die Abstreifeinrichtungen befinden sich normalerweise während des Betriebes in einer nicht-aktiven Ruhestellung und sind von den geförderten Stückgutteilen frei passierbar. Wenn ein Stückgutteil sich der Abgabestelle nähert, an welcher es aus dem Sorter abgegeben werden soll, so wird deren Abstreifeinrichtung durch ein Steuersignal einer Steuereinrichtung aktiviert, wenn das betreffende Förderelement die Abgabestelle erreicht hat. Dabei wird ein kammförmiger Abstreifer mittels eines Abstreiferantriebes so weit nach unten bewegt, daß sich seine Abstreifzinken bis in den Bewegungspfad der Tragböden erstrecken und beim Passieren des Förderelementes jeweils in einen Schlitz seines Tragbodens greifen, um das auf diesem liegende Stückgutteil vom Tragboden über dessen Hinterkante abzustreifen. Danach wird der Abstreifer sogleich wieder in seine nicht-aktivierte Ruhestellung zurückbewegt, es sei denn, daß an dieser Abgabestelle auch das von dem nachfolgenden Förderelement geförderte Stückgutteil abgegeben werden soll.

Diese Anordnung ist jedoch in mehrfacher Hinsicht nachteilig. Ganz abgesehen davon, daß aufgrund der Anordnung der Abstreifeinrichtungen oberhalb der Tragböden die Höhe der zu handhabenden Stückgutteile begrenzt ist, hat sie zur Folge, daß an einer Abgabestelle nicht zugleich auch eine Aufgabe von Stückgut möglich ist. Dieser Nachteil kommt besonders dann zum Tragen, wenn eine größere Anzahl von Aufgabestellen vorgesehen ist und/oder wenn diese während des Betriebes variabel sind, und wenn eine Vielzahl von Abgabestellen vorgesehen ist. Letzteres ist jedoch in zunehmendem Maße der Fall, wobei Anwendungsfälle zunehmen, bei denen man unter technischen und kostenmäßigen Optimierungsgesichtspunkten vorzugsweise den gesamten Sorter mit Abgabestellen belegen würde, um bei möglichst kleiner Baugröße (und entsprechend geringen Kosten) eine möglichst größte Sortierkapazität zu erzielen.

Ein weiterer Nachteil des bekannten gattungsgemäßen Sorters besteht darin, daß unmittelbar vor einer Abgabestelle eine Handaufgabe von Stückgut nicht gefahrlos möglich ist, da es dabei zu einem Einklemmen einer Hand zwischen einem sich einer Abgabestelle nähernden Förderelement und der Abstreifeinrichtung der Abgabestelle kommen kann, wenn die Hand einer Stückgut aufgebenden Person nicht rechtzeitig zurückgezogen wird bevor das Förderelement die Abstreifeinrichtung passiert.

Der vorliegenden Erfindung liegt die Aufgabe zugrunde, einen gattungsgemäßen Sorter insbesondere dahingehend zu verbessern, daß eine Aufgabe von Stückgutteilen an jeder Stelle, also auch dort möglich ist, wo sich eine Abgabestelle befindet, daß also unabhängig von der Anzahl und Positionierung der Aufgabestellen eine größtmögliche Anzahl von Abgabestellen zu verwirklichen ist, wobei zugleich eine gefahrlose Handaufgabe von Stückgutteilen an jeder beliebigen Stelle des Sorters gewährleistet sein soll.

Die Lösung dieser Aufgabe besteht erfindungsgemäß darin, daß die Abstreifeinrichtungen unterhalb der Tragböden angeordnet sind, wobei die Abstreifzinken eines aktivierten Abstreifers bis über die Oberseite des Tragbodens eines die betreffende Abstreifeinrichtung passierenden Tragbodens nach oben vorstehen.

Obwohl diese Maßnahme auch dann durchführbar ist, wenn die Tragböden - wie beim Stand der Technik - mittig zum Sorter angeordnet sind, besteht eine bevorzugte Ausgestaltung der vorliegenden Erfindung darin, daß die Tragböden der Förderelemente quer zur Mittelachse des Stetigförderers versetzt angeordnet sind, und zwar höchst bevorzugt so weit seitlich versetzt, daß sie über dessen Tragkonstruktion frei vorstehen.

Bei einer solchen Ausgestaltung vergrößert sich die Bauhöhe des Sorters durch die Abstreifeinrichtungen ersichtlich nicht, und es steht nicht nur unterhalb der seitlich vorragenden Tragböden ausreichend Platz zur Verfügung, um die Abstreifeinrichtungen in zweckmäßiger Weise unterbringen zu können, sondern zugleich auch hinreichend Platz für Aufnahmeeinrichtungen zum Aufnehmen der ausgeschleusten Stückgutteile, wobei die Abgabe und Aufnahme (bspw. in Behältern) deshalb besonders unproblematisch und demgemäß höchst zweckmäßig ist, weil ein abgegebenes Stückgutteil nach dem Abstreifen von einem Tragboden nicht zunächst zur Seite bewegt zu werden braucht, sondern frei nach unten fallen kann.

Bei einer solchen Ausgestaltung ist weiterhin höchst bevorzugt vorgesehen, daß an jedem Förderelement spiegelsymmetrisch zur Mittelachse des Stückgutförderers jeweils zwei Tragböden angeordnet sind, also ein Tragboden auf der Außenseite und ein zweiter Tragboden auf der Innenseite des Sorters, womit die Sorterkapazität zu verdoppeln ist.

Weitere bevorzugte Ausgestaltungen der vorliegenden Erfindung sind in den Unteransprüchen beschrieben.

Die Erfindung ist nachstehend an Ausführungsbeispielen unter Bezugnahme auf eine schematisierte Zeichnung weiter erläutert.
Es zeigt:
- Fig. 1: eine Draufsicht auf einen erfindungsgemäßen Sorter in vereinfachter, schematisierter Darstellung;
- Fig. 2: eine gegenüber Fig. 1 vergrößerte Schnittansicht durch den Sorter gem. Fig. 1 in Richtung der Schnittlinie II-II in Fig. 1 gesehen;
- Fig. 3: den in Fig. 1 mit einer strichpunktierten Linie III umrandeten Teil (Draufsicht auf fünf Förderelemente) in einer vergrößerten Darstellung;
- Fig. 4: eine ebenfalls stark schematisierte Seitenansicht auf zwei aufeinanderfolgende Förderelemente, welche eine Aufgabe eines Stückgutteils auf einen Tragboden zeigt;
- Fig. 5: eine Fig. 4 entsprechende Darstellung von drei aufeinanderfolgenden Förderelementen, welche eine Abgabe eines Stückgutteils aus dem Sorter zeigt;
- Fig. 6: eine in Förderrichtung gesehene Ansicht einer aktivierten Abstreifeinrichtung mit einem gegenüber Fig. 2 modifizierten Schwenkantrieb;
- Fig. 7: die Abstreifeinrichtung gem. Fig. 6 in Richtung des Pfeils VII in Fig. 6 gesehen;
- Fig. 8: eine Darstellung gem. Fig. 7 im nicht-aktivierten Zustand; und
- Fig. 9: eine Draufsicht auf ein Förderelement mit drei Tragböden, wobei der äußere Tragboden länger als jeder der beiden hintereinander angeordneten inneren Tragböden ist.

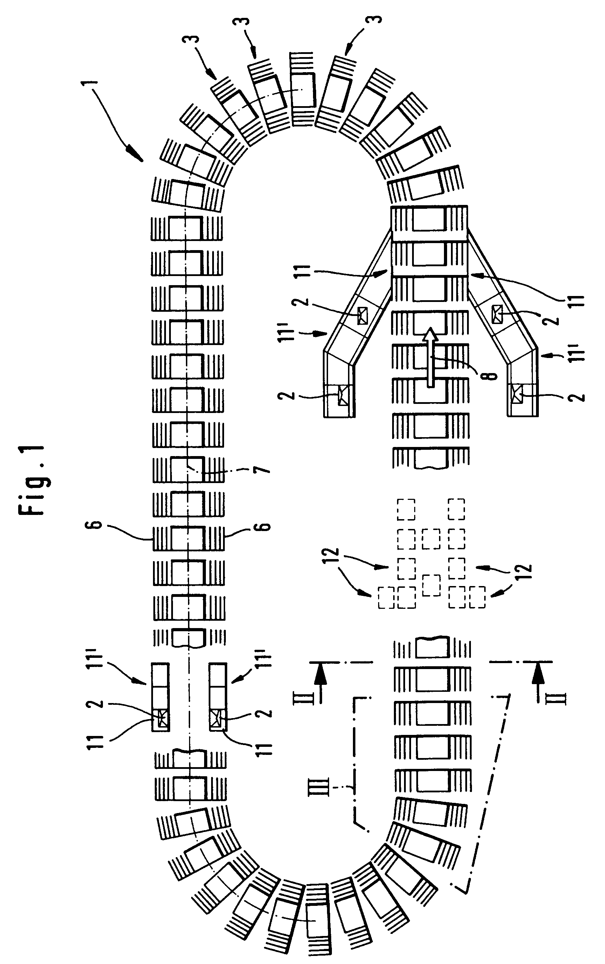

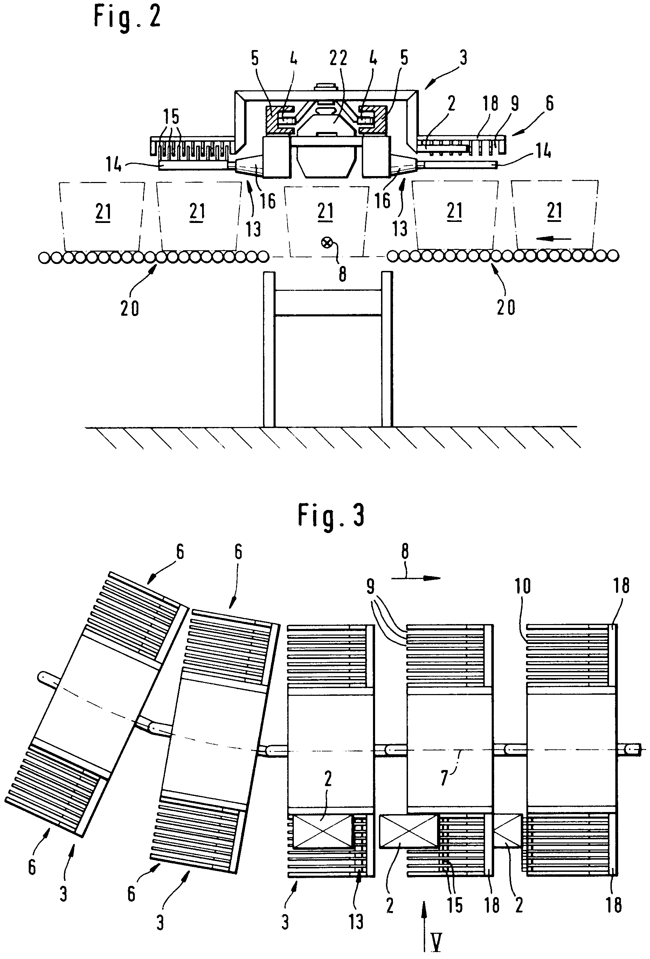

Fig. 1 zeigt in einer vereinfachten Darstellung eine Draufsicht auf einem im ganzen mit 1 bezeichneten Sorter zum Sortieren von flachen, sortengleichen Stückgutteilen 2 wie z.B. Briefen. Der endlos umlaufende Förderstrang des Sorters 1 besteht aus einer Vielzahl von gelenkig miteinander verbundenen Förderelementen 3, die mit Rollen 4 an einer als Doppelschiene ausgebildeten Führung 5 geführt sind (Fig. 2), welch den wesentlichen Teil der Tragkonstruktion bilden und auf dem Untergrund abgestützt sind (nicht dargestellt). Der Antrieb erfolgt über einen Linearmotor 22.

Die Förderelemente 3 weisen jeweils zwei Tragböden 6 auf, die quer zur Mittelachse 7 des Sorters 1 so weit seitlich versetzt angeordnet sind, daß sie außen und innen über dessen Tragkonstruktion frei vorstehen (s. Fig. 2). Jeder Tragboden 6 ist mit in Förderrichtung 8 verlaufenden Durchgangsschlitzen 9 versehen (s. insbesondere Fig. 3), die sich von seinem in Förderrichtung 8 vorn liegenden Abschnitt bis zu seiner Hinterkante 10 erstrecken.

Oben links in Fig. 1 sind in einem der besseren Übersicht halber von Förderelementen 3 ausgesparten Abschnitt beispielhaft zwei Aufgabestellen 11 angedeutet, die als Aufgabevorrichtungen 11' mit Überkopfbeschickung angeordnet und zum einen den inneren Tragböden 6 sowie zum anderen den äußeren Tragböden 6 zugeordnet sind. Dabei befinden sich die Stückgutteile 2 gerade in Warteposition. Der Sorter 1 ist noch nicht mit Stückgutteilen 2 beschickt.

Unten rechts in Fig. 1 sind ebenfalls beispielhaft Aufgabestellen 11 angedeutet, die durch Aufgabevorrichtungen 11' mit Seiteneinschleusung realisiert sind. Die Aufgabevorrichtungen 11' sind mit dem Sorter 1 so synchronisiert, daß die Stückgutteile 2 jeweils ordnungsgemäß auf einem freien Förderelement 3 plaziert werden können, wie dieses beispielsweise in der EP 0 366 857 beschrieben ist. Weitere Aufgabestellen 11 sind in Fig. 1 der besseren Übersicht halber fortgelassen worden.

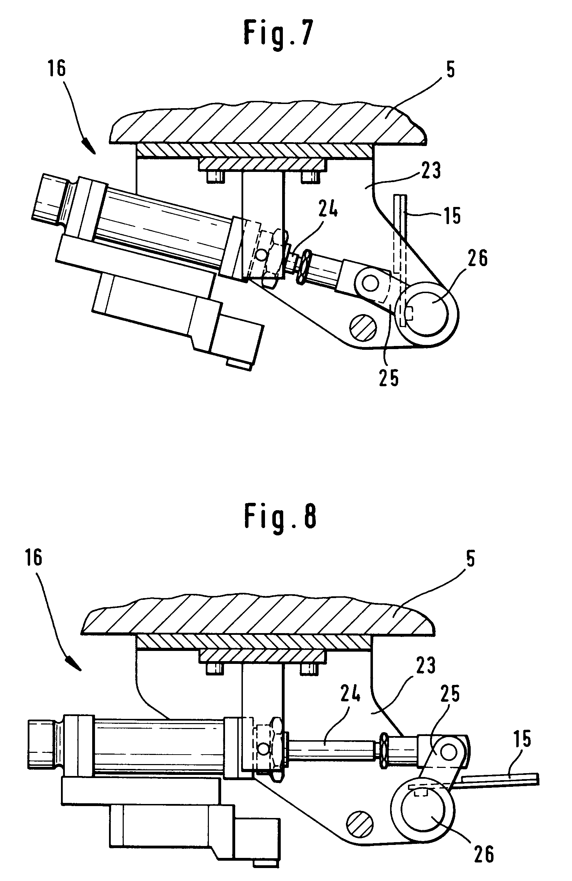

Längs der Förderstrecke ist eine Vielzahl von Abgabestellen 12 vorgesehen, von denen im unteren mittleren Bereich von Fig. 1 nur einige Abgabestellen 12 angedeutet sind. An den Abgabestellen 12 ist unterhalb der Tragböden 6 jeweils eine von einer nicht dargestellten Steuereinrichtung zu aktivierende Abstreifeinrichtung 13 angeordnet (s. Fig. 2-8), die in ihrer normalen, nicht-aktivierten Betriebsstellung von den Stückgutteilen 2 frei passierbar ist, und mittels welcher in ihrer aktivierten Abstreifstellung ein zugefördertes Stückgutteil 2 an der jeweils vorgesehenen Abgabestelle 12 vom Tragboden 6 des betreffenden Förderelementes 3 über dessen Hinterkante 10 abzustreifen und damit nach unten abzugeben ist, wie weiter unten noch im einzelnen erläutert wird.

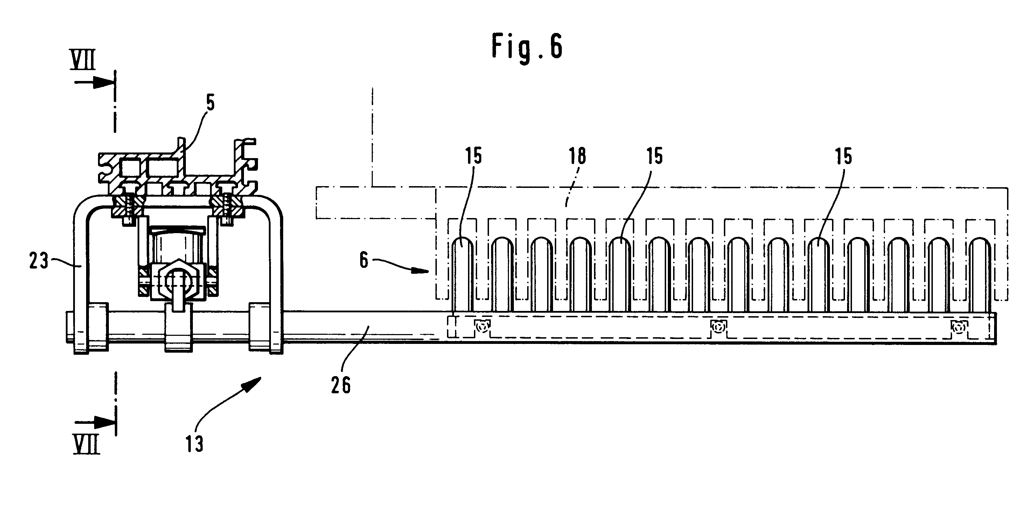

Die Abstreifeinrichtungen 13 weisen jeweils einen kammförmigen Abstreifer 14 auf, dessen in Förderrichtung 8 zu den Schlitzen 9 der Tragböden 6 fluchtende Abstreifzinken 15 die gleiche Teilung wie die Schlitze 9 der Tragböden 6 und eine etwas kleinere Breite als die Schlitzbreite aufweisen. Die Abstreifer 14 sind nach Erhalt eines entsprechenden Steuersignals mittels eines Schwenkantriebes 16 aus ihrer unterhalb der Tragböden 6 liegenden inaktiven Ruhestellung (s. z.B. Fig. 2 rechts) in ihre Abstreifstellung (s. z.B. Fig. 2 links) hochzuschwenken, in welcher die Abstreifzinken 15 sich so weit in den Bewegungspfad der Tragböden 6 erstrecken, daß sie jeweils in einen Schlitz 9 eines die aktivierte Abstreifeinrichtung 13 passierenden Tragbodens 6 greifen und bis über die Oberseite eines die betreffende Abstreifeinrichtung 13 passierenden Tragbodens nach oben vorstehen. Bei der Ausgestaltung gem. Fig. 2 sind die Schwenkantriebe 16 jeweils als Drehmagnet ausgebildet. Bei der Ausgestaltung gem. den Fig. 6-8 bestehen die Schwenkantriebe 16 jeweils aus einer pneumatischen Kolben-Zylinder-Einheit, die mit einem Bügel 23 an der Unterseite der entsprechenden Führung 5 befestigt ist, und deren Kolbenstange 24 über einen Hebel 25 gelenkig mit einer schwenkbar gelagerten Abstreiferwelle 26 verbunden ist, von welcher die Abstreifzinken 15 rechtwinklig abstehen.

Die Tragböden 6 sind an ihrem in Förderrichtung 8 vorn liegenden vorderen Abschnitt 17 unter einem spitzen Winkel nach oben abgeschrägt und an ihrem vorderen Rand mit einer Traverse 18 versehen. An ihrer Innenseite weisen die Tragböden 6 eine Innenwand 19 auf, an welche sich ein Stückgutteil 2 nach seiner Aufgabe anlegen kann. Um dieses sicherzustellen, können die Tragböden 6 jeweils von außen nach innen abfallend geneigt angeordnet sein.

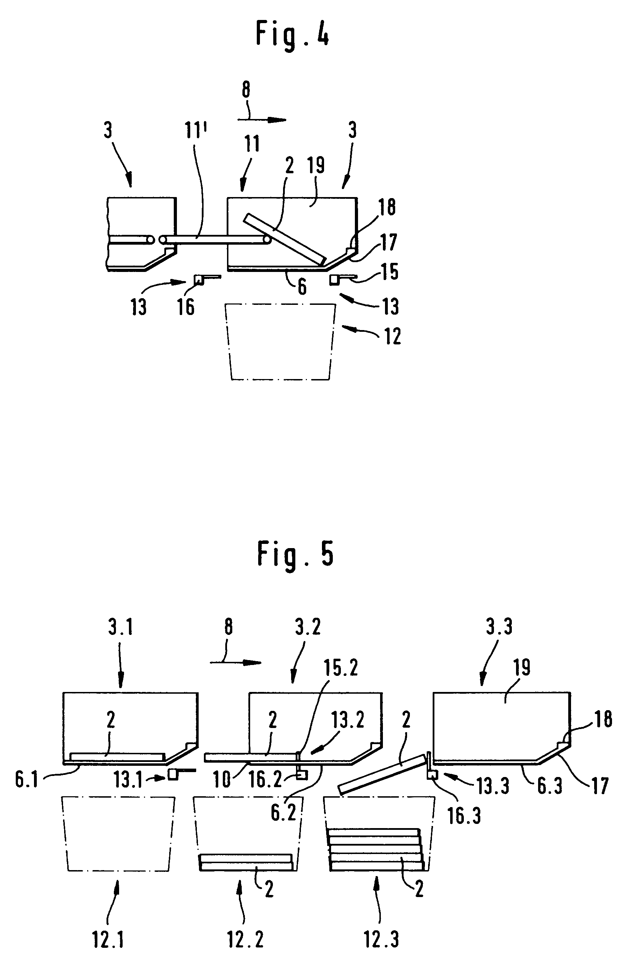

Aus der schematischen Darstellung gem. Fig. 4 ist die Beladung eines freien Förderelementes 3 mittels an einer Aufgabestelle 11 angeordneten Aufgabevorrichtung 11' zu erkennen. Die mit dem Sorter 1 synchronisierte Aufgabevorrichtung 11' wird nach Erhalt eines entsprechenden Signals so aktiviert, daß das betreffende Stückgutteil 2 in der in Fig. 4 dargestellten Weise auf den Tragboden 6 des betreffenden Förderelementes 3 aufgegeben wird. Dabei kippt es mithin über die Vorderkante der Aufgabevorrichtung 11' nach unten ab, wenn sich das betreffende Förderelement 3 an der Aufgabevorrichtung 11' vorbeibewegt, und liegt schließlich auf dessen Tragboden 6 auf, wie dieses im oberen linken Teil von Fig. 5 erkennbar ist. Weiterhin ist auf Fig. 4 erkennbar, daß dieser Aufgabestelle 11 zugleich auch eine Abgabe- bzw. Endstelle 12 ist, da auch an dieser Aufgabestelle 11 unterhalb der Tragböden 6 eine Abstreifeinrichtung 13 angeordnet ist, die sich in inaktiver Stellung befindet, in welcher die Abstreifzinken 15 von dem betreffenden Schwenkantrieb 16 nach unten geschwenkt sind, so daß das nächste zugeförderte Stückgutteil 2 diese Abgabestelle 12 frei passieren kann, aber jedes nachfolgende Förderelement 3 ggfs. das mitgeführte Stückgutteil 2 dort ausschleusen kann, wenn die Abstreifeinrichtung 13 aktiviert wird.

Eine Ausschleusung wird nachstehend anhand der ebenfalls der besseren Übersicht halber schematisiert und vereinfacht dargestellten Fig. 5 erläutert, die in einer Seitenansicht einen Abschnitt des Sorters 1 mit drei aufeinanderfolgenden Förderelementen 3.1, 3.2 und 3.3 zeigt, deren gegenseitige Verbindung der besseren Übersichtlichkeit halber ebenso fortgelassen worden ist wie die übrigen Komponenten des Sorters 1, die für das Ausschleusen eines Stückgutteils 2 ohne Bedeutung sind.

Es ist erkennbar, daß das auf dem Förderelement 3.1 befindliche Stückgutteil 2 die Abgabestelle 12.1 frei passieren wird, da deren Abstreifeinrichtung 13.1 sich in inaktiver Stellung befindet.

Dagegen wird von dem Förderelement 3.2 ein Stückgutteil 2 gerade über dessen Hinterkante 10 abgestreift, da der Schwenkantrieb 16.2 der Abstreifeinrichtung 13.2 deren Abstreifer 14 in die Abstreifstellung hochgeschwenkt hat, bevor das Förderelement 3.2 den Abstreifer 14 erreicht hat, so daß dessen hochgeschwenkte Abstreifzinken 15.2 über die Oberseite des Tragbodens 6.2 vorstehen, in dessen Schlitze einfahren und das Stückgutteil 2 von dem Tragboden 6.2 abstreifen, wenn das Förderelement 3.2 sich in Förderrichtung 8 an dieser Abgabestelle 12.2 vorbeibewegt.

Entsprechendes erfolgte bzgl. des Tragbodens 6.3 des Förderelementes 3.3, wobei dessen Stückgutteil 2 in Fig. 5 bereits völlig vom Tragboden 6.3 abgestreift ist und der Abstreifer der Abstreifeinrichtung 13.3 vom Drehmagneten 16.3 danach sogleich wieder in die inaktive Stellung geschwenkt wird.

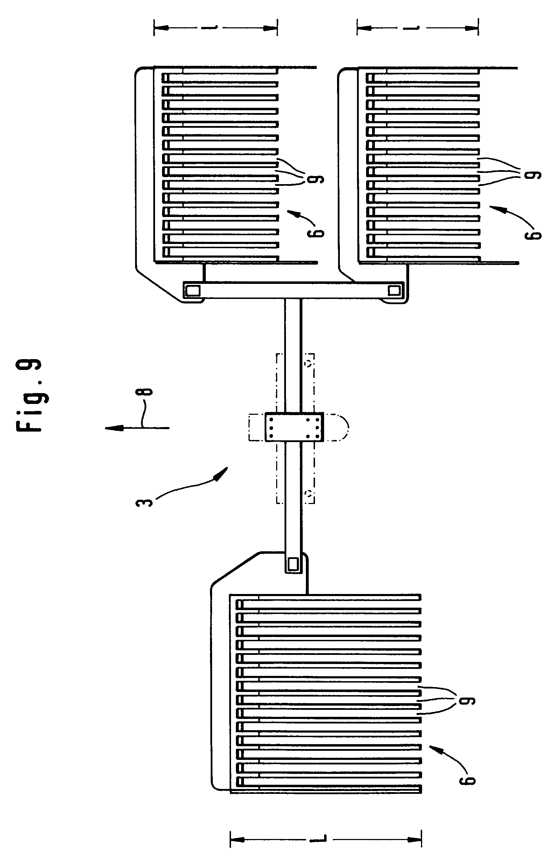

Fig. 9 zeigt eine Draufsicht auf ein Förderelement 3, welches an seiner Außenseite einen Tragboden 6 mit einer Länge L und an seiner Innenseite zwei Tragböden 6 mit einer kleineren Länge l aufweist. Eine solche Ausgestaltung ist zweckmäßig, wenn mit einem Sorter 1 Stückgutteile 2 unterschiedlicher Art und Länge sortiert werden sollen, also z.B. einerseits Zeitschriften und andererseits CDs, wobei dann eine erste Stückgutart auf der Außenseite und die andere Stückgutart auf der Innenseite des Sorters 1 sortiert wird.

Es ist ohne weiteres ersichtlich, daß mit dem erfindungsgemäßen Sorter aufgrund der Tandemausbildung der Tragböden eine hohe Durchsatzleistung zu erzielen ist, und daß dabei zugleich eine hohe Sortierkapazität zu realisieren ist, da unabhängig von der Anzahl und Positionierung der Aufgabestellen 11 eine große Anzahl von Abgabe- bzw. Endstellen 12 zu verwirklichen ist, nämlich auch dort (s. z.B. Fig. 4) wo sich eine Aufgabestelle 11 befindet. Dabei ist es ggfs. alternativ oder zusätzlich zu den Aufgabevorrichtungen 11' auch gefahrlos möglich, Stückgutteile 2 von Hand aufzugeben, da die Abstreifeinrichtungen 13 unterhalb der Tragböden 6 angeordnet sind, so daß es dabei nicht zu einem Einklemmen einer Hand zwischen einer Abstreifeinrichtung 13 und einem Förderelement 3 bzw. dessen Tragboden 6 oder einem auf diesem angeordneten Stückgutteil 2 kommen kann.

Es sei noch darauf verwiesen, daß die Abschrägung der Tragböden 6 an ihrem vorderen Abschnitt 17 nicht nur für die gewünschte Positionierung eines Stückgutteils 2 auf einem Tragboden 6 zweckmäßig ist, sondern daß die vordere Außenseite dieses Abschnittes 17 zugleich eine Abgleitfläche bildet, an welcher ein von einem Abstreifer 14 von dem in Förderrichtung 8 benachbarten Tragboden 6 abgestreiftes Stückgutteil 2 nach unten geleitet wird, wenn es entsprechend lang ist, bzw. wenn der Abstand zwischen zwei aufeinanderfolgenden Tragböden 6 relativ klein ist.

Zu den Abgabe- bzw. Endstellen 12 sei weiterhin noch nachgetragen, daß diese ersichtlich auf unterschiedlichste Weise ausgebildet sein können, daß es sich aber insbesondere für relativ flache Stückgutteile 2 als höchst zweckmäßig herausgestellt hat, wenn an den Abgabestellen 12 unterhalb des Bewegungspfades der Tragböden 6 jeweils ein auf einem gesteuerten Förderer 20 abgestützter und von diesem zugeführten Behälter 21 angeordnet ist, der nach Aufnahme der vorgesehenen Anzahl von Stückgutteilen 2 entfernt und dabei automatisch durch einen nachgeförderten Behälter 21 ersetzt wird.

### Bezugszeichenliste

- 1: Stückgutförderer (Sorter)
- 2: Stückgutteile
- 3: Förderelement
- 4: Rollen
- 5: Führung
- 6: Tragböden (von 3)
- 7: Mittelachse (von 1)
- 8: Förderrichtung (von 1)
- 9: Durchgangsschlitze (von 6)
- 10: Hinterkante (von 6)
- 11: Aufgabestellen
- 11': Aufgabevorrichtung
- 12: Abgabestellen (Endstellen)
- 13: Abstreifeinrichtung
- 14: Abstreifer (von 13)
- 15: Abstreifzinken (von 14)
- 16: Schwenkantrieb
- 17: abgeschrägter Abschnitt (von 6)
- 18: Traverse
- 19: Innenwand (von 6)
- 20: Förderer
- 21: Behälter
- 22: Linearmotor
- 23: Bügel
- 24: Kolbenstange
- 25: Hebel
- 26: Abstreiferwelle

## Patentansprüche

1. Stückgutförderer (Sorter) zum Sortieren von Stückgutteilen, insbesondere von relativ flachen, sortengleichen Stückgutteilen wie z.B. Zeitschriften oder CDs, mit einem angetriebenen, endlos umlaufenden Förderstrang, der aus einer Vielzahl von gelenkig miteinander verbundenen, an einer Führung geführten Förderelementen besteht, die jeweils einen Tragboden zur Aufnahme eines Stückgutteils aufweisen, der mit in Förderrichtung verlaufenden Durchgangsschlitzen versehen ist, die sich bis zu seiner Hinterkante erstrecken; mit wenigstens einer Aufgabestelle; und mit mehreren längs der Förderstrecke vorgesehenen Abgabestellen, an denen jeweils eine von einer Steuereinrichtung aktivierbare Abstreifeinrichtung angeordnet ist, die in einer nicht-aktivierten, normalen Betriebsstellung von den Stückgutteilen frei passierbar ist, und mittels welcher in einer aktivierten Abstreifstellung ein zugefördertes Stückgutteil vom Tragboden eines die betreffende Abgabestelle passierenden Förderelementes über dessen Hinterkante abzustreifen ist, wobei die Abstreifeinrichtungen jeweils einen von einem steuerbaren Antrieb betätigbaren kammförmigen Abstreifer mit Abstreifzinken aufweisen, welche sich in der nicht-aktivierten Betriebsstellung außerhalb des Bewegungspfades der Tragböden und der Stückgutteile befinden, und welche sich in der aktivierten Abstreifstellung so weit in den Bewegungspfad der Tragböden erstrecken, daß sie jeweils in einen Schlitz des Tragbodens eines die Abstreifeinrichtung passierenden Förderelementes greifen, dadurch gekennzeichnet, daß die Abstreifeinrichtungen (13) unterhalb der Tragböden (6) angeordnet sind, wobei die Abstreifzinken (15) eines aktivierten Abstreifers (14) bis über die Oberseite des Tragbodens (6) eines die betreffende Abstreifeinrichtung (13) passierenden Tragbodens (6) nach oben vorstehen.

2. Stückgutförderer nach Anspruch 1, dadurch gekennzeichnet, daß die Abstreifeinrichtungen (13) jeweils einen Schwenkantrieb (16) aufweisen, mittels dessen ihr kammförmiger Abstreifer (14) nach Erhalt eines Steuersignals aus seiner unterhalb der Tragböden (6) liegenden, inaktiven Ruhestellung in seine Abstreifstellung hochschwenkbar ist.

3. Stückgutförderer nach Anspruch 2, dadurch gekennzeichnet, daß die Schwenkantriebe (16) als Drehmagnete (16) ausgebildet sind.

4. Stückgutförderer nach Anspruch 2, dadurch gekennzeichnet, daß die Schwenkantriebe (16) als Kolben-Zylinder-Einheiten ausgebildet sind, die jeweils über einen Hebel (25) mit einer schwenkbar gelagerten Abstreiferwelle (26) gelenkig verbunden sind, von welcher die Abstreifzinken (15) rechtwinklig abstehen.

5. Stückgutförderer nach einem oder mehreren der vorhergehenden Ansprüche, dadurch gekennzeichnet, daß die Tragböden (6) der Förderelemente (3) quer zur Mittelachse (7) des Stetigförderers (1) versetzt angeordnet sind.

6. Stückgutförderer nach Anspruch 5, dadurch gekennzeichnet, daß die Tragböden (6) der Förderelemente (3) so weit seitlich versetzt zur Mittelachse (7) des Stetigförderers (1) angeordnet sind, daß sie über dessen Tragkonstruktion frei vorstehen.

7. Stückgutförderer nach Anspruch 5 oder 6, dadurch gekennzeichnet, daß an jedem Förderelement (3) spiegelsymmetrisch zur Mittelachse (7) des Stückgutförderers (1) jeweils zwei Tragböden (6,6) angeordnet sind.

8. Stückgutförderer nach Anspruch 7, dadurch gekennzeichnet, daß die Tragböden (6) an der Außenseite der Förderelemente (3) eine andere Länge als die Tragböden (6) an der Innenseite der Förderelemente (3) aufweisen.

9. Stückgutförderer nach Anspruch 8, dadurch gekennzeichnet, daß auf der Seite mit den kürzeren Tragböden (6) jeweils zwei in Förderrichtung (8) hintereinander angeordnete Tragböden (6) an einem Förderelement (3) angeordnet sind.

10. Stückgutförderer nach einem oder mehreren der vorhergehenden Ansprüche, wobei die Tragböden (6) jeweils an ihrer Innenseite eine hochstehende Innenwand (19) aufweisen, dadurch gekennzeichnet, daß die Tragböden (6) jeweils von außen nach innen abfallend geneigt sind.

11. Stückgutförderer nach einem oder mehreren der vorhergehenden Ansprüche, dadurch gekennzeichnet, daß die Tragböden (6) an ihrem in Förderrichtung (8) vorn liegenden Abschnitt (17) unter einem spitzen Winkel nach oben abgeschrägt sind und an ihrem vorderen Rand mit einer Traverse (18) versehen sind.

12. Stückgutförderer nach einem oder mehreren der vorhergehenden Ansprüche, dadurch gekennzeichnet, daß an den Abgabestellen (12) unterhalb der Tragböden (6) jeweils ein auf einem gesteuerten Förderer (20) abgestützter Behälter (21) zur Aufnahme von abgegebenen Stückgutteilen (2) angeordnet ist.

13. Stückförderer nach Anspruch 12, dadurch gekennzeichnet, daß dem Behälter (21) auf dem Förderer (20) weitere Behälter (21) nachgeordnet sind, von denen der der Abgabestelle (12) benachbarte Behälter (21) selbsttätig nachgefördert wird, wenn der an der Abgabestelle (12) befindliche Behälter (21) von dieser abgefördert wird.
